# EUROPEAN PATENT SPECIFICATION

(11) **EP 1 726 524 B1**
(45) Date of publication and mention of the grant of the patent: **26.11.2008**
(21) Application number: 05015231.3
(22) Date of filing: 13.07.2005
(51) Int. Cl.: B65B 5/10, B65B 57/10

(54) **System for detecting medicine packet**
Vorrichtung zum Detektieren von Arzneimittelpackungen
Dispositif de détection d'emballages medicaux

(30) Priority: 25.05.2005 KR 2005044067
(43) Date of publication of application: 29.11.2006
(73) Proprietor: JVM Co., Ltd., Daegu 704-170 (KR)
(72) Inventor: Kim, Jun-ho 109-1602 Yongsan Lotte Castle Grand, Daegu 704-923 (KR)
(74) Representative: Grünecker, Kinkeldey, Stockmair & Schwanhäusser Anwaltssozietät

(56) References cited:
- WO-A-20/05051555
- US-A- 4 245 243
- US-A- 4 655 026
- US-A- 5 799 468
- US-A1- 2003 200 726
- US-B1- 6 378 572
- US-B1- 6 505 461
- PATENT ABSTRACTS OF JAPAN vol. 1996, no. 02, 29 February 1996 (1996-02-29) & JP 07 282219 A (SANYO ELECTRIC CO LTD), 27 October 1995 (1995-10-27)

## Description

### BACKGROUND OF THE INVENTION

### Field of the Invention

The present invention relates to a medicine inspection system for detecting a defective medicine packet from a series of packaged medicine packets.

### Description of the Related Art

Generally, an automatic medicine packaging machine indicates an apparatus for automatically and automatically packaging medicines distributed into individual doses.

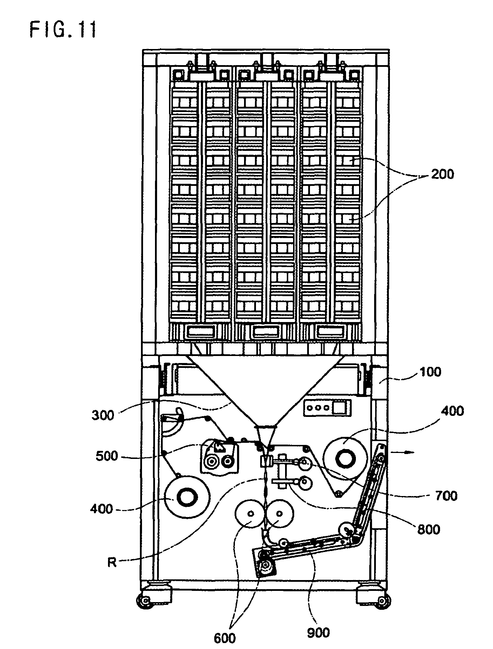

The structure and operation of a conventional automatic medicine packaging machine will be described with reference to Fig. 11 schematically depicting the conventional automatically medicine packaging machine.

As shown in Fig. 11, the conventional automatic medicine packaging machine includes a plurality of tablet cassettes 200 installed on a shelf disposed at the upper side of a main body 100, a hopper 300 installed at the lower side of the tablet cassettes 200, a pair of packaging sheet rolls 400 disposed at the lower lateral sides of the hopper 300, a printer 500 installed at the lower side of one of the packaging rolls 400 to print information such as the patient name, how to take the medicine, or the like, a pair of driving rollers 600 installed below the hopper 300, a sealer 700 disposed between the hopper 300 and the driving rollers 600 to weld the packaging sheets to form a series of medicine packets R, and a punch 800 disposed below the sealer 700 to form holes in the series of medicine packets R.

In such the conventional automatic medicine packaging apparatus, the tablets, dropped into the hopper 300 from the tablet cassettes 200, are inserted between a pair of packaging sheet drawn from the packaging rolls 400 by the driving rollers 600, and the sealer 700 welds the packaging sheets traveling downward to finish a series of medicine packets R and to discharge the series of medicine packets R through the lower side of the main body 100.

The discharged series of medicine packets R is fed from the lower side of the main body 100 to the lateral side of the main body 100 by a feeder 900 and discharged through the lateral side of the main body 100.

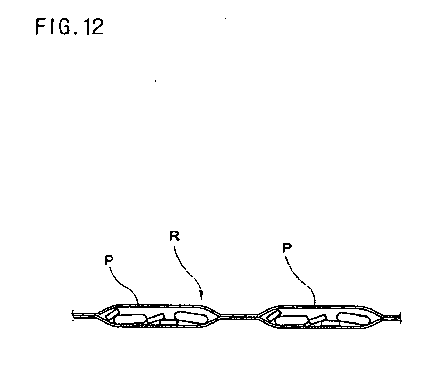

Fig. 12 is a side sectional view illustrating a series of medicine packets in which the tablets are packaged by the conventional automatic medicine packaging machine in Fig. 11.

As shown in the drawing, the series of medicine packets R is manufactured by sealing two package sheets are sealed to each other by the conventional automatic medicine packaging machine and is consist of medicine packets P continuously connected to each other and accommodating several tablets.

The several tablets are piled and accommodated in the medicine packets P.

However, the conventional art has the following disadvantages.

Defective medicine packets are generated when the tablets are damaged during the dropping into the hopper from the tablet cassettes for the packaging medicine packets or the conventional medicine packaging machine is malfunctioned so that less or more than a predetermined number of tablets are packaged. However, according to the conventional art, it is difficult to precisely detect the defective medicine packets.

Moreover, since, although the defective medicine packets are detected with the naked eye by a worker, information about the defective medicine packets is not processed in the form of computer data and treatment thereof is not systemically performed, a post process of removing the defective medicine packets from the series of medicine packets, of re-packaging the tablets, and storing the re-packaged medicine packets together with the normal medicine packaged is difficult and complex.

US 4,245,243 describes a system for registering and sorting out not properly filled deep-drawn packages in a packaging machine according to the preamble of claim 1. The packages may be filled, for example, with tablets. After filling the packages at a filling station, they are transported to a testing station with a TV camera. This camera is used to determine whether the compartments have been properly filled. However, this conventional system may be difficult or impossible to operate if packages with a plurality of potentially different fillings are to be checked.

JP 07 282219 is concerned with a tablet inspection device equipped with image recognition means and tablet inspecting method. In order for this device to operate properly, the tablets have to be translucent.

US 2003/0200726 discloses a system and method for providing temporal patient dosing. The purpose of this system is to provide a medication packet with dosage and use information for the individual patient. The system may comprise a check station, but no details are disclosed with respect to this check station.

US 5,799,468 describes a method of filling blister-pack strips. A scanning device with a camera detects whether blister pockets are filled properly. If a certain pocket is determined not to be filled properly, it is refilled at a subsequent filling device.

None of these conventional systems can properly cope with all possible events in detecting defective medicine packets from a series of medicine packets, i.e. packets comprising damaged tablets or the wrong number of tablets. This is even more difficult if a plurality of different packets with different fillings are to be checked.

### SUMMARY OF THE INVENTION

Therefore, the present invention has been made in view of the above and/or other problems, and it is the object of the present invention to provide a medicine inspection system for easily and accurately detecting a defective medicine packet from a series of medicine packets.

This object is solved by a system with the features of claim 1. Further advantageous embodiments of the invention are referred to in the dependent claims.

It is a further object of the present invention to provide a medicine inspection system for capturing an image of tablets in a medicine packet by spreading the tablets within the medicine packet without piling up.

It is another object of the present invention to provide a medicine inspection system for allowing a worker to visually confirm a defective medicine packet.

It is another object of the present invention to provide a medicine inspection system for easily removing a medicine packet determined as a defective medicine packet from a series of medicine packets.

It is another object of the present invention to provide a medicine inspection system for easily removing a cut defective medicine packet from a series of medicine packets.

It is another object of the present invention to provide a medicine inspection system for easily utilizing information about a medicine packet determined as a defective medicine packet.

In accordance with the present invention, the above and other objects can be accomplished by the provision of a system for inspecting a medicine packet including a conveyor for conveying a series of medicine packets, in which the medicine packets accommodating tablets are continuously connected to each other; a camera for capturing an image of the upper side of the medicine packet conveyed by the conveyor and the condition of the tablets exposed by a backlight; and an image reader for extracting information about the medicine packet from characters printed on the upper side of the medicine packet using the image captured by the camera to read medicine packet information corresponding to the extracted information and for extracting the conditions of the tablets accommodated in the medicine packet from the captured image so as to compare and analyze the tablet conditions with the medicine packet information to determined whether the number of tablets is correct and the tablets are damaged or not.

Preferably, the system further includes a tablet spreader disposed above the conveyor to uniformly spread the tablets accommodated in the medicine packet before the camera captures the image of the medicine packet.

The tablet spreader includes a vibrator for vibrating the conveyor up and down such that the medicine packet is vibrated, and a rotation brush rotated above the conveyor and sweeping the upper sides of the medicine packet.

The system further includes a defective medicine packet marker for marking the upper side of a medicine packet, determined as a defective medicine packet by the image reader, a mark meaning a defective medicine packet.

The defective medicine packet marker includes a stamp installed at the side of the camera and moved up and down to stamp a confirming stamp on the upper side of the medicine packet determined as a defective medicine packet.

The system further includes a medicine packet cutter installed at the side of the conveyor and cutting the medicine packet determined as a defective medicine packet by the image reader by a cutter blade moving up and down.

The system further includes a separating and discharging device for separating the defective medicine packet cut by the medicine packet cutter from the normal medicine packets and for collecting the defective medicine packets.

The separating and discharging device includes a shutter disposed at the end of the conveyor and pivoted up and down to drop the defective medicine packet or to moving the normal medicine packets, a defective medicine packet accommodator for accommodating the defective medicine packet dropped by the shutter, and a normal medicine packet accommodator for accommodating the normal medicine packets horizontally moved by the shutter.

The system further includes a data storage for storing data about the medicine packet determined as defective medicine packets by the image reader.

The system further includes an output device for outputting the data about the defective medicine packet stored in the data storage.

The system further includes a data receiver electrically connected to the image reader and a controller of an automatic medicine packaging machine such that packaging information of the automatic medicine packaging machine is inputted to the image reader.

### BRIEF DESCRIPTION OF THE DRAWINGS

These and/or other objects and advantages of the present invention will become apparent and more readily appreciated from the following description of the embodiments, taken in conjunction with the accompanying drawings, in which:
Fig. 1 is a schematic front sectional view illustrating a medicine packet inspection system according to a preferred embodiment of the present invention;
Fig. 2 is an enlarged front sectional view of main parts of the medicine packet inspection system according to the preferred embodiment of the present invention illustrating conveying of medicine packets;
Fig. 3 is an enlarged front sectional view of main parts of the medicine packet inspection system according to the preferred embodiment of the present invention illustrating the capturing and stamping of medicine packets;
Fig. 4 is an enlarged front sectional view of main parts of the medicine packet inspection system according to the preferred embodiment of the present invention illustrating the separation and discharge of defective medicine packets;
Fig. 5 is a photograph of the upper side of a medicine packet captured by the medicine packet inspection system according to the preferred embodiment of the present invention;
Fig. 6 is a photograph illustrating a process of reading the photograph in Fig. 5;
Fig. 7 is a photograph of a normal medicine packet capture by the medicine packet inspection system according to the preferred embodiment of the present invention;
Fig. 8 is a photograph illustrating a process of reading the photograph in Fig. 7;
Fig. 9 is a photograph of a defective medicine packet captured by the medicine packet inspection system according to the preferred embodiment of the present invention;
Fig. 10 is a photograph illustrating a process of reading the photograph in Fig. 9;
Fig. 11 is a front sectional view illustrating a conventional automatic medicine packaging machine; and
Fig. 12 is a side sectional view illustrating a series of medicine packets in which tablets are packaged by the conventional medicine packaging machine.

### DESCRIPTION OF THE PREFERRED EMBODIMENTS

Hereinafter, a medicine packet inspection system according to the preferred embodiment of the present invention will be described in detail with reference to the accompanying drawings.

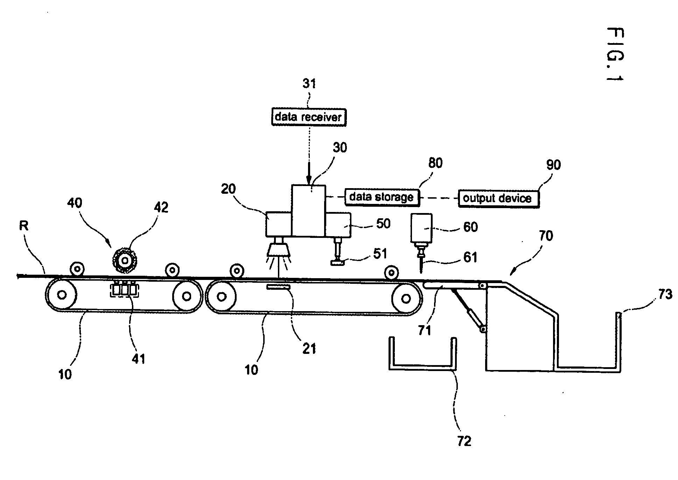

Fig. 1 is a schematic front sectional view illustrating a medicine packet inspection system according to a preferred embodiment of the present invention.

As shown in the drawing, the medicine packet inspection system according to the preferred embodiment of the present invention includes a conveyor 10 for conveying a series of medicine packets R in the horizontal direction, a camera 20 for capturing images of respective medicine packet in the series of medicine packets R conveyed by the conveyor 10, and an image reader 30 for reading a defective medicine packet from the images captured by the camera 20.

The conveyor 10 conveys the series of medicine packets R, in which the medicine packets, in which tablets are packaged, continuously connected to each other, in a state of putting the series of medicine packets R on a conveyor belt conveyed in the horizontal direction when the series of medicine packets R reaches the conveyor 10.

Moreover, the camera 20 captures images of the upper sides of the medicine packets consisting the series of medicine packets R and being conveyed by the conveyor 10.

The camera 20 captures the sides of the medicine packets to obtain information about a patient and how to take the medicines printed on the upper sides of the medicine packets, and captures the tablets accommodated in the medicine packets using a backlight 21 for illuminating the lower side below the lower side thereof.

The image reader 30 extracts information about the medicine packets from characters printed on the upper sides of the medicine packets using the images captured by the camera 20 to read medicine packet information corresponding to the extracted information and extracts the conditions of the tablets accommodated in the medicine packets from the captured images so that the image reader 30 compares and analyzes the tablet conditions with the medicine packet information to determined whether the number of tablets is correct and the tablets are damaged or not.

In other words, the image reader 30 extracts the medicine packet information, i.e. information about a patient, how to take, or the like, from the images of the upper sides of the medicine packets captured by the camera 20, and reads information corresponding to the extracted medicine packet information from pre-inputted medicine packet information.

The image reader 30 compares the number of tablets packaged into a medicine packet read from the medicine packet information with the number of tablet extracted from the image capturing the inside of the medicine packet and analyzes the tablet condition to determine whether the medicine packet is a defective medicine packet or not.

Moreover, the medicine packet inspection system according to the preferred embodiment of the present invention further includes a tablet spreader 40 disposed above the conveyor 10 to uniformly spread the tablets accommodated in the medicine packet before the camera 10 captures the image of the medicine packets. The tablet spreader 40 includes a vibrator 41 for vibrating the conveyor 10 up and down such that the medicine packets are vibrated, and a rotation brush 42 rotated above the conveyor 10 and sweeping the upper sides of the medicine packets.

The tablet spreader 40 spreads the tablets accommodated in the medicine packets uniformly before the camera 20 captures the images of the medicine packets conveyed by the conveyor 10 so that entire tablets accommodated in the medicine packets are correctly captured by the camera 20. The tablets accommodated in the medicine packets are uniformly spread in such a way that the rotation brush 42 sweeps the upper sides of the medicine packets while the vibrator 41 vibrates up and down the medicine packets.

In addition, the medicine packet inspection system according to the preferred embodiment of the present invention further includes a defective medicine packet marker 50 for marking the upper side of a medicine packet, determined as a defective medicine packet by the image reader 30, a mark meaning a defective medicine packet. The defective medicine packet marker 50 includes a stamp 51 installed at the side of the camera 20 and moved up and down to stamp a confirming stamp on the upper side of the medicine packet determined as a defective medicine packet.

The defective medicine packet marker 50 marks a defective medicine packet mark on the upper side the medicine packet determined as a defective medicine packet to allow a worker to easily distinguish the defective medicine packets from normal medicine packets and to treat the defective medicine packets. When the image reader 30 determines a medicine packet as a defective medicine packet, a controller in the image reader controls the stamp 51 to stamp the confirming stamp on the upper side of the defective medicine packet.

In addition to the method of stamping the confirming stamp on the upper side the medicine packet determined, various techniques and methods such as a technique for attaching a sticker on the upper side of the defective medicine packet can be applied.

The medicine packet inspection system according to the preferred embodiment of the present invention further includes a medicine packet cutter 60 installed at the side of the conveyor 10 and cutting the medicine packet determined as a defective medicine packet by the image reader 30 by a cutter blade 61 moving up and down. The controller in the image reader 30 controls the medicine packet cutter 60 to cut and separate the defective medicine packet from the normal medicine packets.

The medicine packet inspection system according to the preferred embodiment of the present invention further includes a separating and discharging device 70 for separating the defective medicine packets cut by the medicine packet cutter 60 from the normal medicine packets and for collecting the defective medicine packets. The separating and discharging device 70 includes a shutter 71 disposed at the end of the conveyor 10 and pivoted up and down to drop the defective medicine packets or to moving the normal medicine packets, a defective medicine packet accommodator 72 for accommodating the defective medicine packets dropped by the shutter 71, and a normal medicine packet accommodator 73 for accommodating the normal medicine packets horizontally moved by the shutter 71.

The separating and discharging device 70 separates the defective medicine packets cut by the medicine packet cutter 60 from the normal medicine packets and discharges the defective medicine packets under the control of the controller in the image reader 30 so that the defective medicine packets are conveniently and precisely separated and discharged.

The medicine packet inspection system according to the preferred embodiment of the present invention further includes a data storage 80 for storing data about the medicine packets determined as defective medicine packets by the image reader 30. The data storage 80 is electrically connected to the image reader 30 to store the data about the medicine packets determined as defective medicine packets by the image reader 30 so that a worker can easily use the data about the defective medicine packets anywhere and anytime.

The medicine packet inspection system according to the preferred embodiment of the present invention further includes an output device 90 for outputting the data about the defective medicine packets stored in the data storage 80. The output device 90 is electrically connected to the data storage 80 such that a worker can visually confirm the data about the defective medicine packets. There are printers for printing the data, monitors for outputting the data on screens, or the like as the output device 90.

The medicine packet inspection system according to the preferred embodiment of the present invention further includes a data receiver 31 electrically connected to the image reader 30 and a controller of an automatic medicine packaging machine such that packaging information of the automatic medicine packaging machine is inputted to the image reader 30.

The data receiver 31 is coupled with the automatic medicine packaging machine and receives information about the tablets accommodated in the series of medicine packets from the automatic medicine packaging machine while inspecting the series of medicine packets discharged from the automatic medicine packaging machine so that the image reader 30 can use the information about the tablets.

Moreover, the medicine packet inspection system according to the preferred embodiment of the present invention receives driving data from the automatic medicine packaging machine via the data receiver 31 so that the automatic medicine packaging machine can be associated with the medicine packet inspection system according to the preferred embodiment of the present invention.

The data receiver 31 could be a network connector for connecting the medicine packet inspection system according to the preferred embodiment of the present invention with the automatic medicine packaging machine via a network or a wired and wireless connector for connecting the medicine packet inspection system according to the preferred embodiment of the present invention with the automatic medicine packaging machine via a wired line or a wireless line.

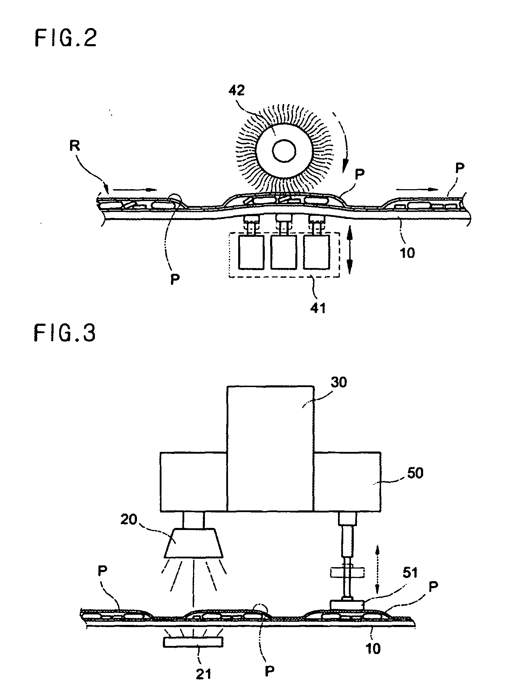

Fig. 2 is an enlarged front sectional view of main parts of the medicine packet inspection system according to the preferred embodiment of the present invention illustrating conveying of medicine packets.

As shown in the drawing, the series of medicine packets R, formed by continuously connected medicine packets P, is conveyed by the conveyor 10 in the state of being positioned on the upper side of the conveyor 10.

When the medicine packets P are conveyed by the conveyor 10, the vibrator 41 is driven from the lower side of the conveyor 10 to the upper side of the conveyor 10 to strike the belt of the conveyor 10 up and down so as to vibrate the belt of the conveyor 10 the medicine packet P positioned on the upper side of the conveyor 10 so that the tablets accommodated in the medicine packet P are uniformly spread.

Moreover, the rotation brush 42, disposed above the medicine packet P, is rotated during the vibration of the medicine packet P by the vibrator 41 so that the tablets, which are not spread due to the vibration but piled up to each other, are completely spread.

Fig. 3 is an enlarged front sectional view of main parts of the medicine packet inspection system according to the preferred embodiment of the present invention illustrating the capturing and stamping of medicine packets.

As shown in the drawing, the camera 20 captures images of the upper sides of the respective medicine packets P conveyed by the conveyor 10, and the image reader 30 extracts the information about the medicine packets P using the captured images.

After capturing the image of the upper side of the medicine packet P, the backlight 21 disposed below the medicine packet P is turned on to expose the contours of the tablets accommodated in the medicine packet P and the camera 20 captures the tablets such that the image reader 30 determines whether the number of the tablets is correct and the tablets are damaged or not using the captured image.

In addition, the stamp 51, disposed in the defective medicine packet marker 50 controlled by the controller in the image reader 30, stamps the confirming stamp on the upper side of the medicine packet P determined as a defective medicine packet by the image reader 30.

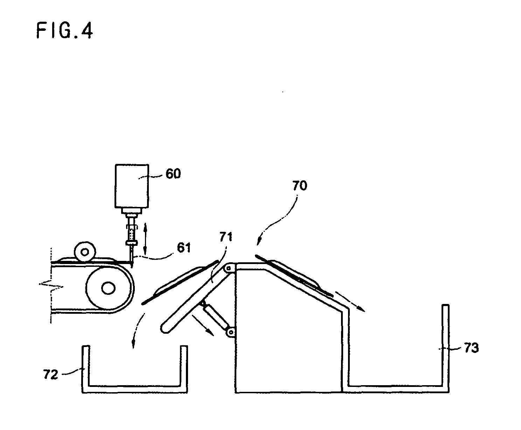

Fig. 4 is an enlarged front sectional view of main parts of the medicine packet inspection system according to the preferred embodiment of the present invention illustrating the separation and discharge of defective medicine packets.

As shown in the drawing, the medicine packet determined as a defective medicine packet is cut by the vertical movement of the cutter blade 61 of the medicine packer cutter 60, and the cut defective medicine packet is separated and discharged into the defective medicine packet accommodator 72 when the shutter 71 of the separating and discharging device 70 is opened downward by a cylinder.

The normal medicine packets, from which the defective medicine packet is removed, pass through the upper side of the shutter 71 and are accommodated in the normal medicine packet accommodator 73 when the shutter 71 is returned to its initial position and becomes parallel with the conveyor 10.

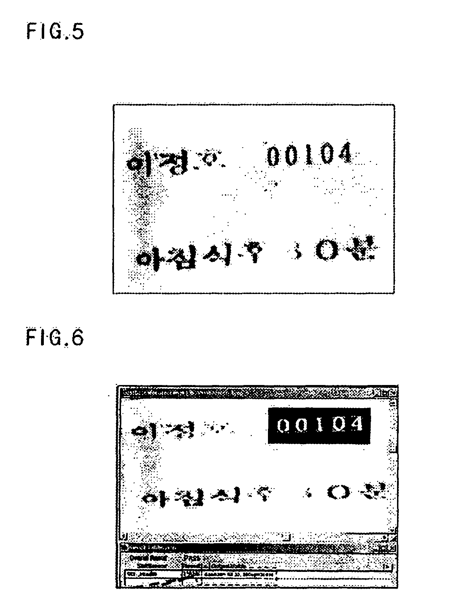

Fig. 5 is a photograph of the upper side of a medicine packet captured by the medicine packet inspection system according to the preferred embodiment of the present invention, and Fig. 6 is a photograph illustrating a process of reading the photograph in Fig. 5.

As shown in the drawings, the camera 20 captures the image of the upper side of the medicine packet P and the captured image is transmitted to the image reader 30 such that the image reader 30 extracts the information such as the patient's name and serial number, and how to take tablets, or the like.

The image reader 30 reads the packaging information of the actual medicine packet pre-inputted into the image reader 30, such as the number of the medicine packets and the tablets accommodated in the medicine packet using the read information.

The image reader 30 compares and analyzes the read information with the information extracted from the image captured by the camera 20 and determines whether the medicine packet is a defective medicine packet or not.

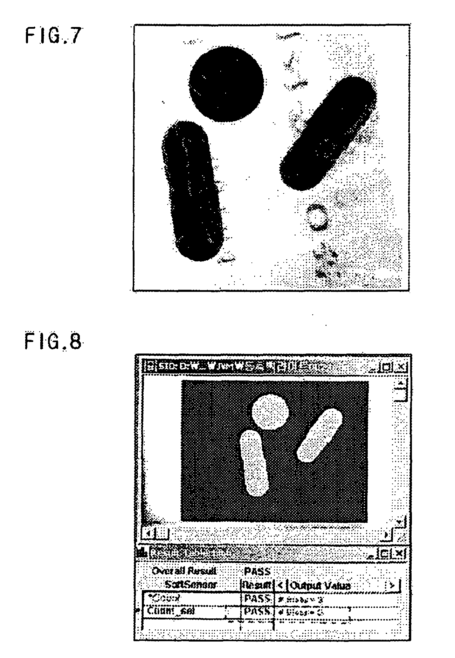

Fig. 7 is a photograph of a normal medicine packet captured by the medicine packet inspection system according to the preferred embodiment of the present invention, and Fig. 8 is a photograph illustrating a process of reading the photograph in Fig. 7.

As shown in the drawings, the backlight 21 disposed below the medicine packet P is turned on to expose the contours of the tablets accommodated in the medicine packet P and the camera 20 captures the upper side of the medicine packet P so as to obtain an image of the conditions of the tablets accommodated in the medicine packet P.

The obtained image is transmitted to the image reader 30 and the image reader 30 reads the number of the tablets and determines whether the tablets are damaged or not using the obtained image.

In other words, the number of the tablets read by the image reader 30 is compared and analyzed with the number of the tablets accommodated in the actually packaged medicine packet P, extracted from the captured image such that the image reader 30 determines whether the number of the tablets is correct, i.e. determines whether the tablets as many as a predetermined number of the tablets are packaged. If the number of the tablets is incorrect, the image reader 30 determines the medicine packet P as a defective medicine packet.

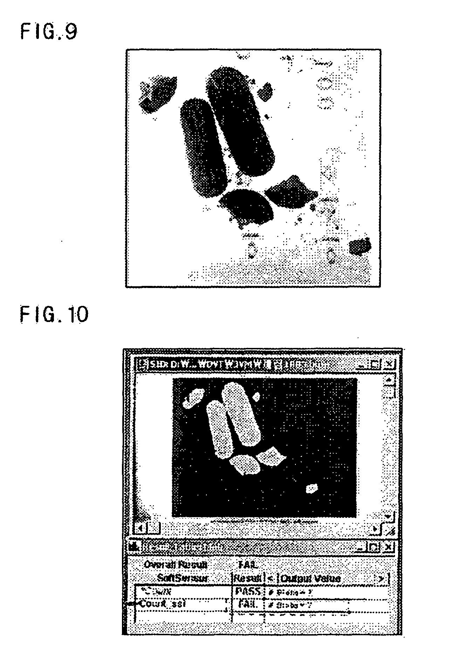

Fig. 9 is a photograph of a defective medicine packet captured by the medicine packet inspection system according to the preferred embodiment of the present invention, and Fig. 10 is a photograph illustrating a process of reading the photograph in Fig. 9.

The backlight 21 disposed below the medicine packet P is turned on to expose the contours of the tablets accommodated in the medicine packet P and the camera 20 captures the upper side of the medicine packet P so as to obtain an image of the conditions of the tablets accommodated in the medicine packet P.

When that the tablets are damaged is confirmed through the obtained image, the image reader 30 determines the medicine packet as a defective medicine packet.

As described above, according to the medicine inspection system of the present invention, a defective medicine packet is easily detected from a packaged series of medicine packets so that the inspection of the defective medicine packet is easily performed and a new medicine packet instead of the defective medicine packet is precisely packaged.

Moreover, according to the medicine inspection system of the present invention, the tablets in the medicine packet are spread to precisely capture the image of the tablets accommodated in the medicine packet so that the number of the tablets in the medicine packet and whether the tablets are damaged or not are precisely determined.

In addition, according to the medicine inspection system of the present invention, a worker can easily distinguish the defective medicine packet with the naked eye so that the defective medicine packet is prevented from being confused with the normal medicine packets when treating the defective medicine packet.

Further, according to the medicine inspection system of the present invention, since the defective medicine packet is easily removed from the series of medicine packets, it is convenient to use.

Moreover, according to the medicine inspection system of the present invention, since the cut defective medicine packet is easily separated and discharged, it is convenient to use.

Moreover, since the use of the information about the defective medicine packet is convenient, the medicine packet is precisely packaged again through the transmission and the reception of the information about the defective medicine packet and a worker easily obtains the information about the defective medicine packet.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A system for inspecting a medicine packet (R) comprising:
a conveyor (10) for conveying a series of medicine packets (R), in which the medicine packets (R) accommodating tablets are continuously connected to each other;
a camera (20) for capturing an image of the upper side of the medicine packet (R) conveyed by the conveyor (10) and the condition of the tablets exposed by a backlight (21);
**characterized by**
an image reader (30) for extracting information about the medicine packet (R) from characters printed on the upper side of the medicine packet (R) using the image captured by the camera (20) to read medicine packet information corresponding to the extracted information and for extracting the conditions of the tablets accommodated in the medicine packet (R) from the captured image so as to compare and analyze the tablet conditions with the medicine packet information to determined whether the number of tablets is correct and the tablets are damaged or not,
and by the system further comprising a tablet spreader (40) disposed above the conveyor (10) to uniformly spread the tablets accommodated in the medicine packet (R) before the camera (20) captures the image of the medicine packet (R), wherein the tablet spreader (40) comprises:
a vibrator (41) for vibrating the conveyor (10) up and down such that the medicine packet (R) is vibrated; and
a rotation brush (42) rotated above the conveyor (10) and sweeping the upper sides of the medicine packet (R).

2. The system for inspecting a medicine packet as set forth in claim 1, further comprising a defective medicine packet marker (50) for marking the upper side of a medicine packet (R), determined as a defective medicine packet by the image reader (30), a mark meaning a defective medicine packet (R).

3. The system for inspecting a medicine packet as set forth in claim 2, wherein the defective medicine packet marker (50) comprises a stamp (51) installed at the side of the camera (20) and moved up and down to stamp a confirming stamp on the upper side of the medicine packet (R) determined as a defective medicine packet.

4. The system for inspecting a medicine packet as set forth in claim 1, further comprising a medicine packet cutter (60) installed at the side of the conveyor (10) and cutting the medicine packet (R) determined as a defective medicine packet by the image reader (30) by a cutter blade (61) moving up and down.

5. The system for inspecting a medicine packet as set forth in claim 4, further comprising a separating and discharging device (70) for separating the defective medicine packet (R) cut by the medicine packet cutter (60) from the normal medicine packets (R) and for collecting the defective medicine packets.

6. The system for inspecting a medicine packet as set forth in claim 5, wherein the separating and discharging device (70) comprises:
a shutter (71) disposed at the end of the conveyor (10) and pivoted up and down to drop the defective medicine packet (R) or to moving the normal medicine packets (R);
a defective medicine packet accommodator (72) for accommodating the defective medicine packet dropped by the shutter (71); and
a normal medicine packet accommodator (73) for accommodating the normal medicine packets horizontally moved by the shutter (71).

7. The system for inspecting a medicine packet as set forth in claim 1, further comprising a data storage (80) for storing data about the medicine packet (R) determined as defective medicine packets by the image reader (30).

8. The system for inspecting a medicine packet as set forth in any of the preceding claims, further comprising an output device (90) for outputting the data about the defective medicine packet (R) stored in the data storage (80).

9. The system for inspecting a medicine packet as set forth in claim 1, further comprising a data receiver (31) electrically connected to the image reader (30) and a controller of an automatic medicine packaging machine such that packaging information of the automatic medicine packaging machine is input to the image reader (30).

## Patentansprüche

1. System zum Prüfen einer Medikamentenpackung (R), das umfasst:
eine Fördereinrichtung (10) zum Befördern einer Reihe von Medikamentenpackungen (R), in der die Medikamentenpackungen (R), die Tabletten enthalten, durchgehend miteinander verbunden sind;
eine Kamera (20) zum Erfassen eines Bildes der Oberseite der durch die Fördereinrichtung (10) beförderten Medikamentenpackung (R) und des Zustandes der Tabletten, die mit einer Hintergrundbeleuchtung (21) belichtet werden;
**gekennzeichnet**
**durch** eine Bildleseeinrichtung (30) zum Extrahieren von Informationen über die Medikamentenpackung (R) aus Zeichen, die auf die Oberseite der Medikamentenpackung (R) gedruckt sind, unter Verwendung des durch die Kamera (20) erfassten Bildes, um Medikamentenpackungs-Informationen zu lesen, die den extrahierten Informationen entsprechen, und zum Extrahieren der Zustände der in der Medikamentenpackung (R) enthaltenen Tabletten aus dem erfassten Bild, um die Zustände der Tabletten mit den Medikamentenpackungs-Informationen zu vergleichen und zu analysieren und zu ermitteln, ob die Anzahl von Tabletten korrekt ist und die Tabletten beschädigt sind oder nicht,
und **dadurch**, dass das System des Weiteren eine Tabletten-Verteileinrichtung (40) umfasst, die oberhalb der Fördereinrichtung (10) angeordnet ist, um die in der Medikamentenpackung (R) enthaltenen Tabletten gleichmäßig zu verteilen, bevor die Kamera (20) das Bild der Medikamentenpackung erfasst, wobei die Tabletten-Verteileinrichtung (40) umfasst:
eine Rütteleinrichtung (41), die die Fördereinrichtung (10) nach oben und unten rüttelt, so dass die Medikamentenpackung (R) gerüttelt wird; und
eine Drehbürste (42), die oberhalb der Fördereinrichtung (10) gedreht wird und die Oberseiten der Medikamentenpackung (R) überstreicht.

2. System zum Prüfen einer Medikamentenpackung nach Anspruch 1, das des Weiteren eine Einrichtung (50) zum Markieren einer fehlerhaften Medikamentenpackung umfasst, mit der die Oberseite einer Medikamentenpackung (R) markiert wird, die durch die Bildleseeinrichtung (30) als eine fehlerhafte Medikamentenpackung ermittelt wurde, wobei eine Markierung bedeutet, dass eine Medikamentenpackung (R) fehlerhaft ist.

3. System zum Prüfen einer Medikamentenpackung nach Anspruch 2, wobei die Einrichtung (50) zum Markieren einer fehlerhaften Medikamentenpackung einen Stempel (51) umfasst, der an der Seite der Kamera (20) installiert ist und auf und ab bewegt wird, um einen Bestätigungsstempel auf die Oberseite der Medikamentenpackung (R) zu stempeln, die als eine fehlerhafte Medikamentenpackung ermittelt wurde.

4. System zum Prüfen einer Medikamentenpackung nach Anspruch 1, das des Weiteren eine Medikamentenpackungs-Schneideinrichtung (60) umfasst, die an der Seite der Fördereinrichtung (10) installiert ist und die Medikamentenpackung (R), die durch die Bildleseeinrichtung (30) als eine fehlerhafte Medikamentenpackung ermittelt wurde, mit einer Schneidklinge (61) abschneidet, die sich auf und ab bewegt.

5. System zum Prüfen einer Medikamentenpackung nach Anspruch 4, das des Weiteren eine Trenn-und-Ausstoßvorrichtung (70) umfasst, mit der die durch die Medikamentenpackungs-Schneideinrichtung (60) abgeschnittene fehlerhafte Medikamentenpackung (R) von den normalen Medikamentenpackungen (R) getrennt wird und die fehlerhaften Medikamentenpackungen gesammelt werden.

6. System zum Prüfen einer Medikamentenpackung nach Anspruch 5, wobei die Trenn-und-Ausstoß-Vorrichtung (70) umfasst:
einen Verschluss (71), der am Ende der Fördereinrichtung (10) angeordnet ist und auf und ab geschwenkt wird, um die fehlerhafte Medikamentenpackung (R) fallen zu lassen oder die normalen Medikamentenpackungen (R) zu bewegen;
eine Einrichtung (72) zum Aufnehmen einer fehlerhaften Medikamentenpackung, mit der die durch den Verschluss (71) fallengelassene fehlerhafte Medikamentenpackung aufgenommen wird; und
eine Einrichtung (73) zum Aufnehmen einer normalen Medikamentenpackung, mit der die durch den Verschluss (71) horizontal bewegte normale Medikamentenpackung aufgenommen wird.

7. System zum Prüfen einer Medikamentenpackung nach Anspruch 1, das des Weiteren einen Datenspeicher (80) zum Speichern von Daten über die Medikamentenpackung (R) umfasst, die durch die Bildleseeinrichtung (30) als fehlerhafte Medikamentenpackung festgestellt wurde.

8. System zum Prüfen einer Medikamentenpackung nach einem der vorangehenden Ansprüche, das des Weiteren eine Ausgabevorrichtung (90) zum Ausgeben der in dem Datenspeicher (80) gespeicherten Daten über die fehlerhafte Medikamentenpackung (R) umfasst.

9. System zum Prüfen einer Medikamentenpackung nach Anspruch 1, das des Weiteren eine Datenempfangseinrichtung (31) umfasst, die elektrisch mit der Bildleseeinrichtung (30) und einer Steuereinheit einer automatischen Medikamentenverpackungsmaschine verbunden ist, so dass Verpackungsinformationen der automatischen Medikamentenverpackungsmaschine in die Bildleseeinrichtung (30) eingegeben werden.

## Revendications

1. Système d'inspection d'un paquet de médicaments (R) comprenant :
un convoyeur (10) pour convoyer une série de paquets de médicaments (R), dans lequel les paquets de médicaments (R) contenant des cachets sont reliés continûment entre eux ;
une caméra (20) pour capturer une image du côté supérieur du paquet de médicaments (R) convoyé par le convoyeur (10) et l'état des cachets exposés à une lumière venant de l'arrière (21) ;
**caractérisé par**
un dispositif de lecture d'image (30) pour extraire l'information sur le paquet de médicaments (R) à partir des caractères imprimés sur le côté supérieur du paquet de médicaments (R) en utilisant l'image capturée par la caméra (20) pour lire l'information de paquet de médicaments correspondant à l'information extraite et pour extraire les états des cachets contenus dans le paquet de médicaments (R) de l'image capturée de façon à comparer et analyser les états des cachets avec l'information de paquet de médicaments pour déterminer si le nombre de cachets et correct et si les cachets sont endommagés ou non,
et par le fait que le système comprend en outre un dispositif d'étalement de cachets (40) disposé au-dessus du convoyeur (10) pour étaler uniformément les cachets contenus dans le paquet de médicaments (R) avant que la caméra (20) capture l'image du paquet de médicaments (R), dans lequel le dispositif d'étalement de cachets (40) comprend :
un vibrateur (41) pour faire vibrer le convoyeur (10) de haut en bas de telle manière que le paquet de médicaments (R) vibre ; et
une brosse tournante (42) tournant autour du convoyeur (10) et balayant les côtés supérieurs du paquet de médicaments (R).

2. Système d'inspection d'un paquet de médicaments selon la revendication 1, comprenant en outre un dispositif de marquage de paquet de médicaments défectueux (50) pour marquer le côté supérieur d'un paquet de médicaments (R), déterminé comme un paquet de médicaments défectueux par le dispositif de lecture d'image (30), une marque signifiant un paquet de médicaments (R) défectueux.

3. Système d'inspection d'un paquet de médicaments selon la revendication 2, dans lequel le dispositif de marquage de paquet de médicaments défectueux (50) comprend un timbre (51) installé du côté de la caméra (20) et déplacé de haut en bas pour imprimer un timbre de confirmation sur le côté supérieur du paquet de médicaments (R) déterminé comme un paquet de médicaments défectueux.

4. Système d'inspection d'un paquet de médicaments selon la revendication 1, comprenant en outre un dispositif de coupe de paquet de médicaments (60) installé du côté du convoyeur (10) et coupant le paquet de médicaments (R) déterminé comme un paquet de médicaments défectueux par le dispositif de lecture d'image (30) par une lame de coupe (61) se déplaçant vers le haut et vers le bas.

5. Système d'inspection d'un paquet de médicaments selon la revendication 4, comprenant en outre un dispositif de séparation et de déchargement (70) pour séparer le paquet de médicaments (R) défectueux coupé par le dispositif de coupe de paquet de médicaments (60) des paquets de médicaments (R) normaux et pour collecter les paquet de médicaments défectueux.

6. Système d'inspection d'un paquet de médicaments selon la revendication 5, dans lequel le dispositif de séparation et de déchargement (70) comprend :
un dispositif de fermeture (71) disposé à l'extrémité du convoyeur (10) et pivoté de haut en bas pour faire tomber le paquet de médicaments (R) défectueux ou pour déplacer les paquets de médicaments (R) normaux ;
un dispositif de recueil de paquet de médicaments défectueux (72) pour recueillir le paquet de médicaments défectueux lâché par le dispositif de fermeture (71) ; et
un dispositif de recueil de paquets de médicaments normaux (73) pour recueillir les paquets de médicaments normaux déplacés horizontalement par le dispositif de fermeture (71).

7. Système d'inspection d'un paquet de médicaments selon la revendication 1, comprenant en outre un dispositif de stockage de données (80) pour stocker des données sur le paquet de médicaments (R) déterminé comme paquet de médicaments défectueux par le dispositif de lecture d'image (30).

8. Système d'inspection d'un paquet de médicaments selon l'une quelconque des revendications précédentes, comprenant en outre un dispositif de sortie (90) pour sortir les données sur le paquet de médicaments (R) défectueux stockées dans le dispositif de stockage de données (80).

9. Système d'inspection d'un paquet de médicaments selon la revendication 1, comprenant en outre un récepteur de données (31) connecté électriquement au dispositif de lecture d'image (30) et un dispositif de commande d'une machine d'emballage de médicaments automatique de telle manière que l'information d'emballage de la machine d'emballage de médicaments automatique est entrée dans le dispositif de lecture d'image (30).
